# DEMANDE DE BREVET EUROPEEN

(11) **EP 1 150 022 A2**
(43) Date de publication de la demande: **31.10.2001**
(21) Numéro de dépôt: 01119491.7
(22) Date de dépôt: 12.11.1997
(51) Int. Cl.: F16B 7/14, B65D 41/04

(54) **Système et procédé d'assemblage, et dispositifs pourvus de ce système**

(30) Priorité: 12.11.1996 FR 9613768; 21.05.1997 FR 9706197
(62) Demande divisionnaire de: 97945910.4
(71) Demandeur: Elyce Innovation, F-44300 Nantes (FR)
(72) Inventeur: Chene, Emmanuel, F-44450 Saint Julien de Concelles (FR)
(74) Mandataire: Pontet, Bernard

(57) **Abrégé**

Système pour réaliser l'assemblage d'une première (1) et d'une seconde (2) parties d'un dispositif, comprenant des premiers (4) et des seconds (3) éléments d'accouplement associés respectivement aux premières et secondes parties du dispositif.
Les éléments d'accouplement comprennent chacun une ou plusieurs zones de contact agencées pour guider spatialement les premières et secondes parties au cours de leur déplacement relatif. Ces zones de contact peuvent consister en une ou plusieurs rampes (410,420,430,310,320,330) inclinées disposées circulairement sur une face intérieure de la première ou seconde partie correspondante.
Les premiers et seconds moyens d'accouplement (4,3) peuvent être fabriqués sans contre-dépouille et agencés pour subir une déformation au cours du serrage progressif de façon à procurer une rétention sensiblement normale à la zone d'interface.
Utilisation notamment les domaines de la cosmétique, de la parfumerie; de l'alimentaire et des biens de consommation, notamment pour des disques compacts, audio ou CD-ROM.

## Description

La présente invention concerne un système d'assemblage. Elle vise également un procédé mis en oeuvre dans ce système, ainsi que des dispositifs, notamment des dispositifs conteneurs tels que des boîtes ou des coffrets, pourvue de ce système.

Sont données ci-après plusieurs définitions de concepts utilisés dans la suite:
Par déplacement, on entend toute translation, rotation, et combinaison de translations et de rotations.
Par zone d'interface, on entend tout plan de jonction ou de joint entre deux parties d'un système d'ouverture/fermeture ou d'assemblage.
Par zone de glissement, on entend toute zone d'approche d'une partie d'un système d'assemblage sur l'autre partie de ce système.
En matière d'effort de rétention, on utilisera l'expression d'effort normal dans le cas d'une translation, et l'expression d'effort axial dans le cas d'une rotation.
En matière d'effort de serrage, on utilisera l'expression d'effort perpendiculaire au déplacement dans le cas d'une translation, et l'expression d'effort radial dans le cas d'une rotation.
Par paroi mince, on entend toute paroi réalisée à partir de matériaux (plastiques ou métalliques):
   - en feuilles, formées notamment par thermoformage, emboutissage ou toute autre technique équivalente,
   - transformés par rotomoulage, injection, soufflage, etc.

Dans de nombreux domaines, tels que ceux de la cosmétique, de la parfumerie, de l'agro-alimentaire et des biens de consommation, des produits ou des articles sont commercialisés dans des boîtes ou des coffrets rigides. Ces boîtes ou coffrets comprennent généralement une partie principale destinée à contenir le produit ou l'article, et une partie amovible, par exemple un couvercle ou un bouchon, à laquelle est associé un système d'assemblage.

On connaît par exemple des systèmes d'assemblage réversible opérant par vissage, par clippage, par insertion en force, ou encore par charnière. Les systèmes actuels d'assemblage présentent cependant à l'usage des inconvénients, notamment d'être de maniement difficile et même fastidieux lorsqu'il est nécessaire d'effectuer plusieurs tours de vissage, ou bien encore d'être fragiles lorsqu'ils sont soumis à une utilisation intensive comme cela peut être le cas pour des coffrets de disque compact ou de poudrier en parfumerie. Les systèmes d'assemblage actuels sont coûteux à fabriquer. Ils nécessitent des pièces mâles et femelles différentes impliquent pour leur fabrication des outillages très coûteux de cadence ralentie par la cinématique interne.

On connaît, notamment par le document WO9407038, des systèmes d'assemblage tubulaire mettant en oeuvre des effets de serrage par coincement radial obtenu par rotation d'une pièce tubulaire mâle dans une pièce tubulaire femelle, ces pièces tubulaires présentant des formes appropriées, par exemple en forme de came. Dans ces systèmes d'assemblage tubulaire, les problèmes de préhension et d'ergonomie ne se posent pas.

Or, il n'en est pas de même dans la plupart des application précitées, dans lesquels les consommateurs aspirent à des boîtes ou coffrets offrant un accès plus aisé et plus rapide aux produits ou articles contenus dans ces boîtes ou coffrets.

Le but de la présente invention est de satisfaire ces aspirations tant du côté des consommateurs que du côté du fabricant et de remédier aux inconvénients précités en proposant un système d'assemblage rapide qui allie une plus grande facilité d'emploi et une meilleure solidité et nécessitant des outillages simples, permettant des cadences élevées et sans besoin de cinématique interne.

Par ailleurs, la résistance normale à l'arrachement est directement liée d'une part à l'effort de serrage exercé sur le système d'assemblage, d'autre part au coefficient de frottement entre les matériaux constituant les deux parties, et à l'angle de serrage ou de coincement. Par ailleurs, l'absence de plaquage forcé d'une pièce sur l'autre, autrement que par la pression exercée par l'opérateur, rend très délicate la réalisation de l'étanchéité sur le plan parallèle à la zone d'interface.

Il s'agit de proposer un système d'assemblage remédiant aux inconvénients précités tout en conservant l'intérêt économique d'une fabrication sans contre-dépouille.

Cet objectif est atteint avec un système pour réaliser l'assemblage d'une première et d'une seconde parties d'un dispositif, comprenant des premiers et seconds moyens d'accouplement situés respectivement sur les première et seconde parties et définissant en position fermée une zone d'interface, ces premiers et seconds moyens d'accouplement coopérant pour procurer, par un déplacement relatif d'une partie par rapport à l'autre un serrage progressif par génération d'efforts sensiblement normaux à ce déplacement, dans lequel l'un au moins desdits premiers et seconds moyens d'accouplement est fabriqué sans contre-dépouille et est agencé pour pouvoir subir une déformation au cours dudit serrage progressif, de façon à procurer par création d'une contre-dépouille une rétention sensiblement normale à la zone d'interface.

Le système d'assemblage selon l'invention vise préférentiellement mais non limitativement des dispositifs pourvus de parois minces. Il est particulièrement approprié pour des systèmes d'assemblage réalisés à partir de matériaux fortement ou aisément déformables. Ceci concerne notamment des applications et secteurs techniques spécifiques, par exemple dans l'industrie agro-alimentaire ou cosmétique, qui requièrent une résistance à l'arrachement (rétention axiale ou normale à la zone d'interface) ainsi qu'une étanchéité du conteneur ou de l'emballage équipé de ce système. Par ailleurs, on recherche généralement pour ces produits une refermabilité garantissant la conservation et l'hygiène, tout particulièrement lorsqu'il s'agit de produits non consommés en une seule fois, en agro-alimentaire ou en pharmacologie. Plus généralement, se pose le problème de la rétention normale ou axiale lorsque le contenant exerce une pression à l'intérieur de l'enceinte (boissons gazeuses, spray, etc..) ou lorsqu'on souhaite que l'assemblage puisse être saisi par le couvercle.

Il est à noter que le système selon l'invention admet en outre une différence de tolérance plus grande qu'avec les procédés antérieurs, et procure ainsi un avantage supplémentaire en terme de durée de vie des outillages, de rattrapage de jeu, et d'assemblage de matériaux différents présentant des tolérances de fabrication distinctes, par exemple, des assemblages plastique-verre, plastique-bois.

Dans le cas d'une rotation, l'action est compensée par des réactions qui ont des composantes radiales mais également axiales. La rétention axiale est obtenue lors de l'effort de serrage grâce à une déformation de la matière. Les déformations judicieusement exploitées permettent de créer une contre-dépouille en utilisation alors que cette contre-dépouille n'existait pas en fabrication. Ceci permet d'obtenir une rétention proche d'un système vis-écrou, quart de tour ou queue d'aronde, tout en conservant les avantages et l'originalité d'un système basé sur une fabrication sans contre-dépouille, donc plus aisée, moins coûteuse et plus rapide.

Pour l'étanchéité, ceci permet en particulier de plaquer un couvercle sur une base afin d'assurer une étanchéité horizontale directe ou bien réalisée par un joint rapporté, écrasé entre le couvercle et la base. Dans la suite de la description, les termes couvercle et base doivent être considérés dans une acception large.

On peut avantageusement prévoir un mode de réalisation dans lequel une pente dans le plan normal à la zone d'interface et sensiblement tangentielle au déplacement est réalisée. Dans le cas d'une rotation, elle reproduit l'effet d'un filet de vis. De cette façon, après être pincé, le couvercle tend à être attiré sur la base, avec une rétention et un serrage du couvercle de type radial mais également axial.

On obtient ainsi, du fait de l'absence de contre-dépouille, une minimisation des coûts d'outillage et une amélioration des cadences de production.

Le système d'assemblage selon l'invention peut être appliqué pour tout rayon de courbure et notamment en translation à rayon de courbure infini, ainsi que sur des courbes complexes.

S'agissant de la déformation des matériaux mis en oeuvre dans le système d'assemblage selon l'invention, on peut ou non prévoir de rester dans la limite élastique des matériaux, impliquant une déformation rémanente ou non. La réutilisation de l'assemblage peut conditionner la déformation initiale rémanente ou non.

On peut aussi prévoir un dispositif constitué par un empilement de plusieurs pièces de tailles et de formes différentes, pourvus de systèmes d'assemblage selon l'invention, afin de réaliser une modularité des volumes.

Par ailleurs, plusieurs sous-systèmes d'assemblage peuvent être répartis en plusieurs points d'un dispositif pourvu d'un système selon l'invention.

Suivant un autre aspect de l'invention, les premiers et seconds moyens d'accouplement réalisés sans contre-dépouille comprennent une ou plusieurs zones de contact générées pour guider spatialement les première et seconde parties d'un dispositif au cours de leur déplacement relatif.

Ainsi, le système d'assemblage selon l'invention procure une meilleure ergonomie d'utilisation que les systèmes d'assemblage antérieurs. En effet, la manipulation d'assemblage ou de désassemblage effectuée par un utilisateur est assistée par un guidage spatial des deux parties du système.

Selon cet autre aspect de l'invention particulièrement approprié lorsque des matériaux peu déformables sont mis en oeuvre pour la réalisation des parties d'assemblage, les premiers et seconds moyens d'accouplement comprennent chacun une ou plusieurs rampes disposées circulairement sur une face intérieure de la première ou seconde partie correspondante, et les rampes des premiers moyens d'accouplement coopèrent avec les rampes des seconds moyens d'accouplement pour procurer, par une action extérieure de rotation d'une partie par rapport à l'autre effectuée sur une fraction de tour, une fermeture puis un accouplement par serrage radial progressif ou un désaccouplement par décoincement des première et seconde parties selon le sens de rotation et une séparation des deux parties.

Ainsi, les fonctions d'assemblage peuvent être obtenues sans que l'extérieur de la pièce ne comporte de partie saillante ou directement préhensible. L'action d'ouverture se fait par la combinaison d'une pression et d'une rotation d'une partie par rapport à l'autre. En effet, en exerçant une rotation sur une partie, l'autre tend à se déplacer suivant un mouvement de translation., ce qui a pour effet de séparer les deux parties permettant ainsi de les dissocier ou désaccoupler en se saisissant de l'une d'elles.

La partie inférieure et la partie supérieure pouvant être identiques au niveau des rampes, les premiers et seconds moyens d'accouplement peuvent parfaitement être hermaphrodites, ce qui présente notamment l'avantage majeur de ne nécessiter qu'une empreinte pour la fabrication des deux parties par injection de plastique moulé par exemple.

Le coincement des moyens d'accouplement est réalisé en prévoyant sur les rampes des parties saillantes et des parties en creux, les parties saillantes des rampes d'une partie venant se loger dans les parties en creux des rampes de l'autre partie. La largeur des parties en creux s'amenuisant au fur et à mesure que l'opérateur effectue une rotation dans le sens horaire, il se produit un coincement des parties émergentes à l'intérieur des parties en creux. L'ajustement, positif au début, devient progressivement négatif. Les deux parties assemblées peuvent subir une sollicitation d'ouverture normale à leur plan d'assemblage d'autant plus importante que ces deux parties auront été serrées l'une contre l'autre par une sollicitation vive en rotation dans le sens horaire.

Concernant les disques supports d'informations, on connaît, par le WO9414160 un coffret comprenant deux volets articulables autour d'un axe charnière, dans lequel le disque est maintenu par le centre par une pièce de maintien faisant ressort solidaire de l'un des volets.

Il est fréquent que les éléments du coffret réalisant la liaison pivot et le maintien en position du disque se fragilisent, se détériorent et se cassent, du fait notamment de chocs.

Pour remédier à ces inconvénients, il est proposé dans le cadre de la présente invention un coffret pour disque compact pourvu d'un système d'assemblage selon l'invention disposé centralement.

En outre, on peut avantageusement prévoir que l'une au moins des deux parties amovibles soit conçue pour procurer un grossissement optique d'informations et/ou de graphismes disposés sur au moins l'une des faces d'un disque ou d'un livret contenu dans ce coffret.

On peut également insérer entre les deux parties amovibles du coffret une jaquette de suspension ou un livret de dimensions supérieures à celle dudit coffret qui est ensuite enfermé dans un film plastique.

Suivant encore un autre aspect de l'invention, il est proposé un cadre pour recevoir un coffret selon l'invention. Les dimensions extérieures de ce cadre peuvent d'ailleurs correspondre à celles d'un coffret standard de disque compact, permettant alors d'utiliser les bacs actuels de stockage et de distribution. On peut également envisager la fabrication de ce cadre directement avec l'une des parties du coffret. Le cadre peut par exemple être en forme d'oeil et être conçu pour pouvoir tenir verticalement dans une position stable et être placé dans une seconde version en permettant la consultation.

Suivant un autre aspect de l'invention, il est proposé un procédé d'assemblage mis en oeuvre dans un système selon cette seconde version de l'invention équipant un dispositif en deux parties amovibles, caractérisé en ce qu'il comprend les étapes suivantes:
- mise en contact des deux parties amovibles du dispositif pourvu de ce système, ces parties amovibles comportant des formes d'accouplement complémentaires,
- déplacement d'une partie par rapport à l'autre selon une zone de glissement,
- assemblage par serrage progressif jusqu'à déformation de surfaces sensiblement normales à la zone d'interface.

D'autres particularités et avantages de l'invention apparaîtront encore dans la description ci-après. Aux dessins annexés donnés à titre d'exemples non limitatifs:
- La figure 1A est une vue en coupe des deux parties séparées d'un coffret pour disque compact selon l'invention;
- la figure 1B est une vue en coupe du coffret de la figure 1A à l'état fermé;
- la figure 2 est une vue schématique d'un système d'assemblage selon l'invention;
- la figure 3 est une vue ouverte d'un coffret selon l'invention conçu pour contenir deux disques ou un disque et un feuillet;
- la figure 4 est une vue en coupe d'un autre exemple de réalisation d'un coffret pour disque compact;
- la figure 5 illustre la cinématique d'un système d'assemblage selon l'invention, du type hermaphrodite à trois pentes;
- la figure 6 illustre plusieurs modes d'utilisation d'un coffret selon l'invention entre les deux parties duquel est insérée une jaquette ou un livret;
- la figure 7 représente un premier mode de réalisation d'un système d'assemblage selon l'invention;
- la figure 8 représente un second mode de réalisation d'un système d'assemblage selon l'invention;
- la figure 9 représente un troisième mode de réalisation d'un système d'assemblage selon l'invention;
- les figures 10A, 10B et 10C représentent respectivement une vue ouverte d'un coffret selon l'invention en forme d'oeil, une vue de dessus de ce coffret muni d'un entourage, et une vue en coupe du coffret fermé;
- la figure 10D illustre un exemple de rangement de coffrets selon l'invention en forme d'oeil;
- la figure 10E illustre un empilement de coffrets selon l'invention en forme d'oeil;
- la figure 11 représente un système d'assemblage par emmanchement d'éléments coniques selon l'invention;
- la figure 12 représente un dispositif de fixation ou jeu d'assemblage mettant en oeuvre un système d'assemblage selon l'invention;
- la figure 13 représente un conteneur de type "shaker" pourvu d'un système d'assemblage selon l'invention, dans différentes situations; et
- la figure 14 illustre un exemple de réalisation d'un plateau à éléments amovibles adapté aux transports en commun et mettant en oeuvre des systèmes d'assemblage selon l'invention.
- La figure 15 est une vue en coupe des deux parties d'un système d'assemblage selon l'invention réalisé sans contre-dépouille, au stade de la fabrication;
- la figure 16 est une vue en coupe du système représenté en figure 15, en utilisation;
- la figure 17A est une vue de côté de deux pièces d'un système d'assemblage mettant en oeuvre un profil en développé linéaire de type "double avec pente", au stade de la fabrication;
- la figure 17B est une vue de face en coupe des deux pièces représentées en figure 17A;
- la figure 18 est une vue de dessus de l'une des pièces représentées en figures 17A;
- la figure 19A illustre l'interaction des deux pièces du système représentée en figure 18A, au stade de l'utilisation;
- la figure 19B est une vue de face en coupe du système représenté en figure 19A;
- les figure 20A, 20B et 20C représentent respectivement un couvercle, un conteneur et leur assemblage, pour une barquette incluant des systèmes d'assemblage tels que représentés en figures 18A à 19B;
- la figure 21A est une vue de côté de deux pièces d'un système d'assemblage mettant en oeuvre un profil en développé linéaire de type "simple avec pente", au stade de la fabrication;
- la figure 21B est une vue de face en coupe des deux pièces représentées en figure 21A;
- la figure 21C est une vue de dessus du système représenté en figure 21A;
- la figure 22A illustre l'interaction des deux pièces du système représentée en figure 21A, au stade de l'utilisation;
- la figure 22B est une vue de face en coupe du système représenté en figure 22A, lorsque le couvercle est juste posé;
- la figure 22C est une vue de face en coupe du système représenté en figure 22A, en utilisation;
- les figure 23A, 23B et 23C représentent respectivement un couvercle, un conteneur et leur assemblage, pour une barquette incluant des systèmes d'assemblage tels que représentés en figures 21A à 22C;
- la figure 24A représente une partie mobile d'un système d'assemblage selon l'invention conçu pour des fixations dans des parois creuses;
- la figure 24B représente la partie mobile et la partie fixé du système d'assemblage de la figure 24A, avant accouplement;
- la figure 24C représente le système d'assemblage des figures 24A et 24B, en position verrouillée;
- les figures 25A et 25B sont des vues en coupe du système d'assemblage des figures 24A à 24C, respectivement avant accouplement et en position verrouillée;
- la figure 26 illustre une bouteille dotée d'un bouchon mettant en oeuvre un système selon l'invention dans une configuration multi-niveaux;
- la figure 27 représente un pot, utilisable par exemple dans le domaine agro-alimentaire ou cosmétique, et pourvu d'un système d'assemblage selon l'invention;
- la figure 28 représente un mode particulier de réalisation d'un système d'assemblage selon l'invention, de type non réversible;
- la figure 29 représente un autre_mode particulier de réalisation d'un système d'assemblage selon l'invention, de type non réversible;
- la figure 30A représente les deux parties d'un système d'assemblage selon l'invention pourvu de moyens complémentaires pour assurer l'étanchéité de la fermeture; et
- la figure 30B représente le système d'assemblage de la figure 30A, en position fermée.
- les figure 31A, 31B et 31C représentent un premier exemple de mise en oeuvre d'un système d'assemblage selon l'invention, pour un conteneur de révolution tel cu'une canette de boisson;
- les figures 32A, 32B et 32C représente un second exemple de mise en oeuvre d'un système d'assemblage selon l'invention, pour un conteneur de révolution tel qu'un pot de peinture;
- la figure 33 illustre un exemple de réalisation d'un système d'assemblage selon l'invention pour permettre une fixation dans une paroi creuse; et
- la figure 34 est une vue en coupe du système d'assemblage dans deux situations caractéristiques.

On va maintenant décrire plusieurs exemples de réalisation d'un système d'assemblage selon l'invention, ainsi que des exemples de coffrets et de dispositifs pourvus de ce système, en même temps que le procédé d'assemblage mis en oeuvre dans le système selon l'invention. Les éléments communs de différents exemples de réalisation décrits serons désignés par des références communes.

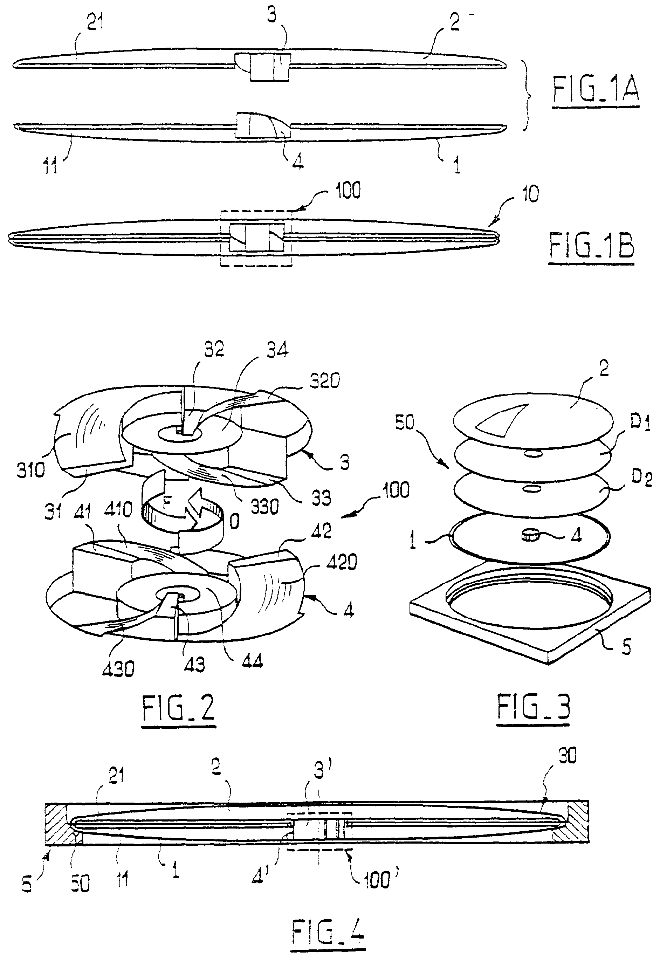

Une première partie de la présente description est consacrée à des exemples de réalisation de systèmes d'assemblage selon la première version de l'invention correspondant à la mise en oeuvre de matériaux faiblement déformables ou durs. On va tout d'abord décrire un exemple de réalisation d'un coffret pour disque compact selon l'invention, en référence aux figures 1A et 1B.

Un coffret 10 selon l'invention comporte, en référence à la figure 1, deux parties 1, 2 de forme sensiblement lenticulaire comportant chacune un évidement intérieur 11, 21 définissant, lorsque les deux parties sont accouplées, un logement intérieur adapté pour recevoir au moins un disque, et un dispositif central d'accouplement 100 constitué d'un premier élément d'accouplement 4 solidaire de la première partie 1 et d'un second élément d'accouplement 3 solidaire de la seconde partie 2. Le coffret 10 peut être avantageusement disposé dans un cadre récepteur 5, comme l'illustre la figure 3, ce cadre présentant par exemple un épaulement interne de forme adaptée pour recevoir la périphérie extérieure du coffret, et un pourtour extérieur de forme quelconque, par exemple de forme carrée identique à celle des coffrets actuels de disque compact, ou en forme d'oeil.

Les parties 1 et 2 peuvent être réalisés dans tout matériau, par exemple en matériau plastique injecté transparent, et peuvent assurer sur toute ou partie de leur surfaces respectives, une fonction de grossissement optique. Leur forme lenticulaire contribue à cette fonction de grossissement qui peut être plus ou moins accentuée en utilisant des matériaux présentant des indices optiques adaptés.

Le dispositif d'accouplement 100 est de type hélicoïdal, comme l'illustre la figure 2. Le premier élément d'accouplement 4, situé au centre de la face intérieure de la première partie 1, comprend à titre d'exemple non limitatif trois dents 41, 42, 43 disposées radialement et pourvues chacune d'une rampe 410, 420, 430, et un creux central 44. Le second élément d'accouplement 3 comprend un creux central 34 et trois dents 31, 32, 33 disposées radialement et pourvues chacune d'une rampe 310, 320, 330. Le premier élément 4 et le second élément 3 sont conçus pour être accouplés de telle sorte qu'en position fermée, les dents respectives 41, 42, 43; 31, 32, 33 soient respectivement en contact tangentiel. Les rampes respectives 410, 420, 430; 310, 320, 330 de chaque élément d'accouplement 4, 3 sont conçues pour être complémentaires en position fermée et pour assurer un déplacement hélicoïdal des dents 41, 42, 43; 31, 32, 33 dans les séquences d'ouverture et de fermeture du coffret 10, comme cela sera décrit dans la suite. Il est à noter que dans ce mode d'accouplement, on peut avantageusement prévoir que les deux éléments d'accouplement soient de type hermaphrodite, le maintien des deux parties en position fermée étant alors assuré par une conformation spécifique des dents permettant leur imbrication en position fermée.

On peut concevoir un coffret 50 selon l'invention du type de celui qui vient d'être décrit mais agencé pour contenir deux disques D1, D1, ou encore un disque et un feuillet, comme l'illustre la figure 3.

Un coffret selon l'invention peut ainsi être conçu pour recevoir un ou plusieurs disques en fonction des besoins. Dans le cas d'un coffret conçu pour un disque unique, ce disque peut être maintenu en position sur l'une quelconque des parties du coffret par des moyens de maintien classiquement utilisés dans les coffrets pour disque compact. Dans le cas d'un coffret conçu pour recevoir plusieurs disques, ces disques peuvent être empilés sur un axe central prévu sur l'une des parties du coffret, ou bien être répartis dans l'une et l'autre parties. Un livret peut avantageusement remplacer l'un des disques compacts.

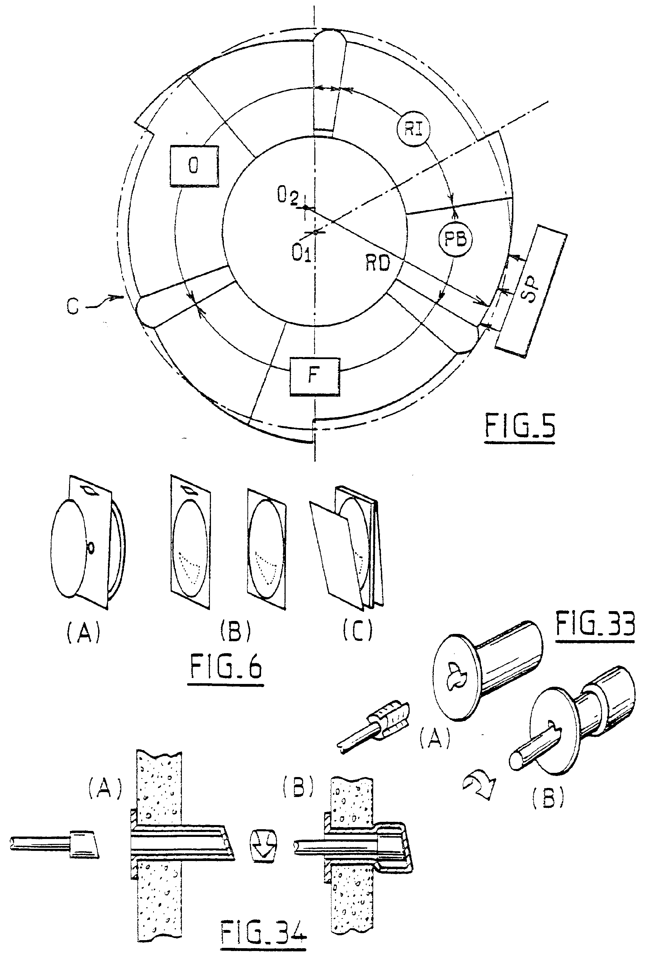

Dans un autre exemple de réalisation illustré par la figure 4, le coffret 30 est pourvu d'un dispositif d'accouplement central 100' comprenant un élément femelle central 4' solidaire de la première partie 1 et un élément mâle central 3' solidaire de la seconde partie 2. L'élément central 3' peut comporter, à titre d'exemple non limitatif, un élément 6 de centrage en trois points et trois éléments déformables disposés sur le pourtour de l'élément de centrage de façon équilatérale. Cet élément mâle 3' est ainsi conçu pour être inséré et maintenu par serrage dans l'élément femelle 4'.

Dans un exemple C de cinématique d'un système selon l'invention, du type hermaphrodite à trois pentes (figure 5), une ouverture hélicoïdale O est obtenue par une rotation d'une fraction de tour dans le sens anti-horaire provoquant une montée sur les trois rampes inclinées. La fermeture F du système est obtenue par une rotation d'une fraction de tour dans le sens horaire provoquant une descente le long des trois rampes inclinées RI. Lorsque les parties saillantes atteignent les paliers bas PB des parties creuses, on entre alors dans une phase SP de serrage progressif permettant notamment un rattrapage de l'usure des pièces. Cette fonction de serrage progressif est obtenue par le fait que le profil du palier bas présente une courbure de centre 02 et de rayon RD désaxé par rapport au centre principal O1 du système. Ceci conduit à un rétrécissement du palier bas PB qui est mis ainsi à profit pour assurer le coincement des pièces.

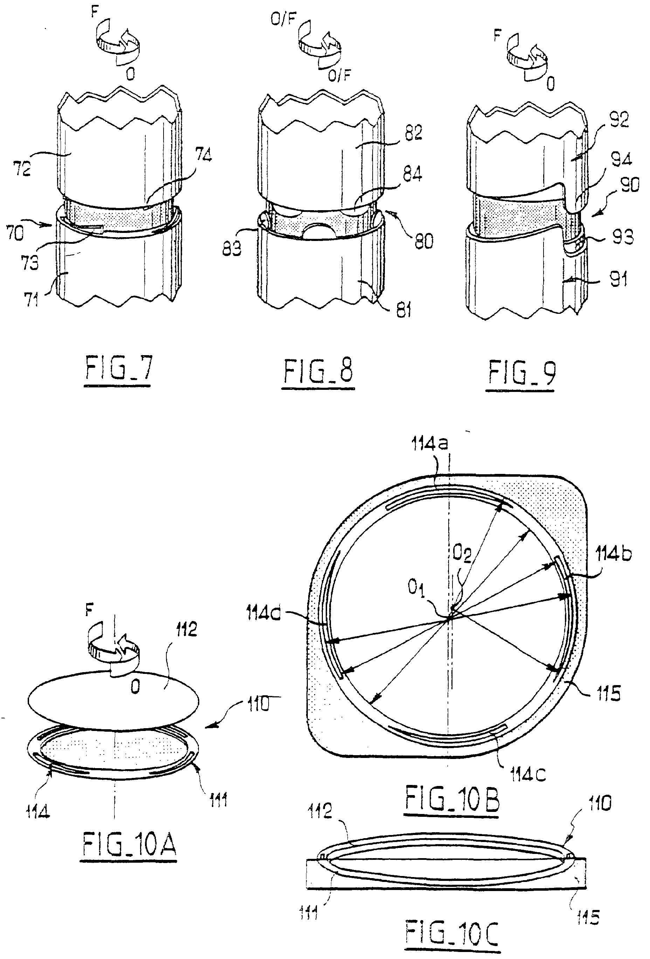

On va maintenir décrire, à titre d'exemples non limitatifs, trois modes de réalisation d'un dispositif de type bouchon mettant en oeuvre un système d'assemblage selon l'invention, en référence aux figures 7, 8 et 9. Dans un premier mode de réalisation correspondant à une option de maintien fort (figure 7), les première et seconde pièces 71, 72 du système d'assemblage 70 selon l'invention sont pourvues de pièces d'accouplement 73, 74 comprenant un ensemble de rampes inclinées agencées de la façon qui vient d'être décrite en référence aux figures 2 et 5. Dans ce premier mode de réalisation, l'ouverture O est obtenue par une rotation d'une fraction de tour dans un sens déterminé, par exemple le sens anti-horaire, tandis que la fermeture F est obtenue par rotation d'une fraction de tour dans le sens contraire.

Dans un deuxième mode de réalisation représenté en figure 8, les première et seconde pièces amovibles 81, 82 du système 80 selon l'invention sont pourvues de pièces d'accouplement 83, 84 comprenant chacune un ensemble d'éléments saillants 84 de forme sensiblement arrondie agencés pour pénétrer en position fermées dans des évidements ménagés entre les éléments saillants de la pièce amovible opposée. Ce mode de réalisation permet une ouverture et une fermeture dans les deux sens. Dans le troisième mode de réalisation représenté en figure 9, les deux pièces amovibles 91, 92 du système 90 selon l'invention présentent chacune un bord d'interface 93, 94 de profil irrégulier, à la différence des deux autres modes de réalisation dans lesquels les bords d'interface présentent en position fermée une apparente extérieure régulière ou lisse. Ce troisième mode de réalisation peut être chois lorsque l'on souhaite par exemple procurer à l'utilisateur du système une visibilité extérieure de ce système.

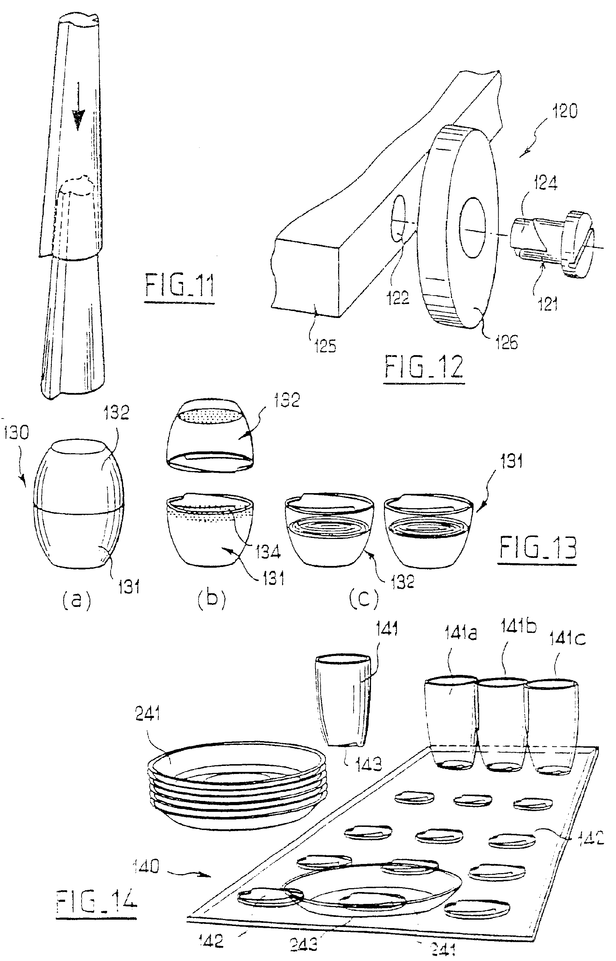

On va maintenant décrire plusieurs exemples d'application de systèmes d'assemblage selon l'invention, notamment dans les domaines de la cosmétique (figures 10A à 10C), des services alimentaires (figures 11, 13 et 14), et de la fixation (figure 12).

Dans le domaine de la cosmétique et de la parfumerie, des boîtes selon l'invention peuvent être conçues pour faire fonction de poudrier, de palette de maquillage, ou encore pour contenir des crèmes et tout produit cosmétique, notamment les bouchons et fermoirs.

On peut ainsi concevoir, en référence aux figures 10A, 10B et 10C, un poudrier 110 comprenant deux parties amovibles 112, 111 comprenant chacune au niveau de leur périphérie de contact des éléments 114 d'accouplement opérant selon des modes précédemment décrits, notamment en référence à la figure 5. La partie supérieure 112 peut avantageusement être réalisée dans un matériau transparent et présenter une forme lenticulaire procurant un effet de grossissement optique, tandis que la partie inférieure 111 peut être également pourvue d'une partie basse également amovible (non représentée) pour fournir par exemple un miroir ou une palette de maquillage. Les éléments d'accouplement 114a-d ont de préférence une forme dissymétrique et présentent un rétrécissement pour assurer la fonction de serrage progressif décrite précédemment, ce rétrécissement correspondant par exemple à un décentrement des rayons de courbure des paliers bas des éléments d'accouplement. Par ailleurs, on peut prévoir que la partie inférieure 111 du poudrier 110 soit fournie dans un cadre ou coffret de présentation 115.

Dans le domaine de l'agro-alimentaire, on peut concevoir des boîtes selon l'invention pour contenir des produits alimentaires sous la forme de liquides, de pâtes, de crèmes, de yaourt, de sandwiches ou encore en vrac. On peut notamment prévoir une boîte conçue pour recevoir un hamburger. On peut également concevoir un bol de robot ménager pourvu d'un premier système d'assemblage pour son couvercle, et d'un second système d'assemblage pour assurer son verrouillage sur la base d'un robot ménager. On peut aussi prévoir un conteneur 130 de type "shaker" pour réaliser des émulsions et des mélanges, comme l'illustre la figure 13. En position fermée, les deux pièces amovibles 131, 132 sont emboîtées. l'étanchéité du dispositif 130 peut être assurée par des techniques classiques de soudage. Les deux parties amovibles d'un conteneur de ce type peuvent être utilisées comme bols pour consommer. Un autre exemple particulièrement avantageux d'application de systèmes d'assemblage selon l'invention consiste à proposer des plateaux-repas 140 comportant sur leur face supérieur des emplacements munis d'un ensemble d'éléments d'accouplement 142 et prévus pour recevoir des pièces amovibles telles qu'une assiette 241 ou des verres ou gobelets 141a-c pourvus en creux d'éléments d'accouplement 143, 243 coopérant avec les éléments d'accouplement 142 du plateau 140, mais pouvant également être posés sur une table de disposant pas de système d'accouplement. On peut ainsi fournir à des clients de transports collectifs (avion, bateau, car, par exemple) des plateaux-repas présentant une grande stabilité, sans rompre avec les habitudes d'utilisation.

Dans le domaine des biens de consommation, des boîtes selon l'invention peuvent être utilisées pour contenir des disques, des articles de bricolage, de décoration, des bijoux et bien d'autres objets. On peut citer, à titre d'exemple non limitatif, un système de fixation 120 (figure 12) mettant en oeuvre un système d'assemblage selon l'invention. Ce système est constitué d'une part d'un premier élément d'accouplement 124 disposé en extrémité d'une vis 121 et d'autre part, d'un second élément d'accouplement disposé au sein d'un trou 122 ménagé dans un bâti 125. Un tel système de fixation permet par exemple la fixation d'une pièce 126 par rotation de la vis 121 sur une fraction de tour. Un tel système peut trouver des applications pour des jeux, ou dans encore dans le secteur du bricolage ou des fixations industrielles.

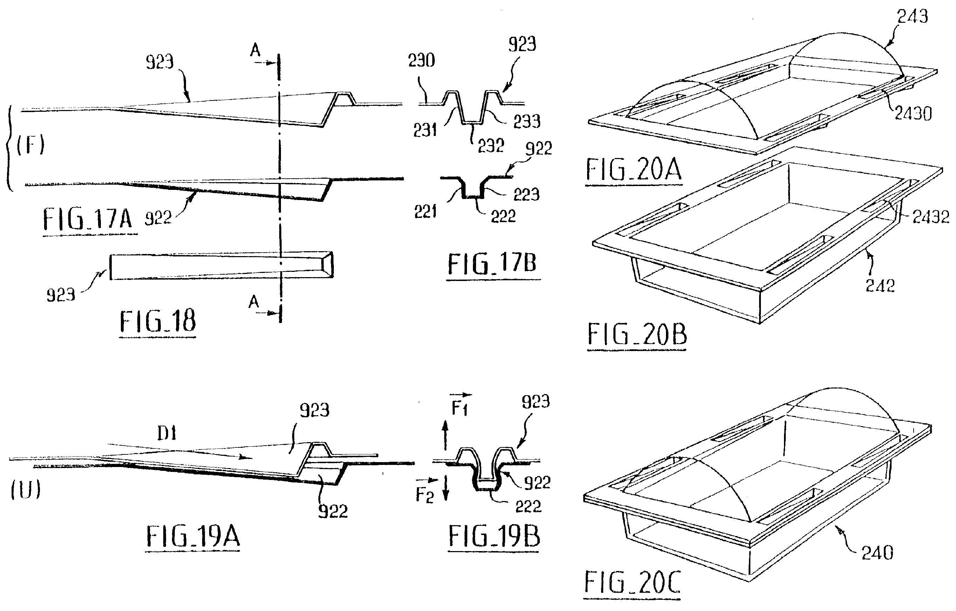

On va maintenant décrire, dans la cadre d'une seconde partie de la description, plusieurs exemples de réalisation de systèmes d'assemblage sans contre-dépouille selon la seconde version de la présente invention, en même temps que le procédé de réalisation associé, en référence aux figures 15 à 32C.

Il s'agit, en premier lieu, de réaliser un système d'assemblage mettant en oeuvre des parois minces, par exemple des matériaux en feuille, par exemple à partir de feuilles de plastique ou de métal. Dans la phase de fabrication (F) illustrée très schématiquement par la figure 15, on considère deux feuilles 152, 153 à partir desquelles on réalise des formes qui sont fabriquées sans contre-dépouilles, d'où un faible coût d'outillage et de grandes cadences de production. Après fabrication, on dispose à partir de deux feuilles 152, 153 d'un système d'assemblage présentant par exemple une forme de section rectangulaire avec des flans respectifs 521, 523; 531, 533 et un fond 522, 532 et des rebords sensiblement plans 520, 530. Au stade de l'utilisation (U) illustrée en figure 16, les déplacements relatifs (D1 ∈ 153, D2 ∈ 152) et la déformation des pièces 152, 153 contribuent à la création ou à l'augmentation de forces normales à la zone d'interface. Ceci conduit à un effet de "contre-dépouille" qui procure une rétention (F1/F2) d'axe normal à la zone d'interface.

Lors de la fabrication d'emballages, on réalise la déformation par forme et/ou contre-forme de matériaux en feuilles, par exemple dans le cas du thermoformage plastique, de l'emboutissage métal, ou encore par aspiration (dépression) ou par soufflage (surpression). Il se produit habituellement une diminution de l'épaisseur sensiblement normale au plan de fabrication par étirement naturel. Ainsi, l'épaisseur normale d'une feuille est très supérieure à l'épaisseur de cette même feuille dans la zone d'étirement naturel provoqué par l'emboutissage.

Cette réalité souvent handicapante trouve ici tout son intérêt car elle permet une déformation aisée des surfaces sensiblement normales à la zone d'interface, due à un faible moment de flexion. A contrario, les surfaces parallèles à la zone d'interface conservent leur épaisseur initiale procurant ici un moment d'inertie favorable pour retenir la pression.

Une conséquence naturelle est une déformation des pièces au cours du serrage. Plus on serre, plus les matériaux se déforment, renforçant avantageusement:
- la rétention F1, F2 normale à la zone d'interface;
- l'étanchéité entre les deux surfaces.

Ce principe de déformation à la base de la présente peut par exemple être appliqué pour la réalisation d'emballages ayant un profil en développé linéaire de type "double avec pente", en référence aux figures 17A, 17B, 18, 19A et 19B. On considère ainsi, au stade de la fabrication, une feuille 923 faisant fonction de couvercle et une autre feuille 922 faisant fonction de base. Le couvercle 923 présente une forme spécifique avec des rebords 230, des flans latéraux 231, 233 et un fond 232, tandis que la base 922 présente une forme de puits avec des flans 221, 223 et un fond 222.

Au stade de l'utilisation, illustré par les figures 19A et 19B, avec un déplacement D1 du couvercle 923 contre la base 922, on obtient un assemblage performant par déformation des surfaces de contact des deux formes, ce qui procure une rétention normale à la zone d'interface.

Il est en outre possible d'obtenir une butée franche ou bien un encliquetage en dimensionnant de façon appropriée les matériaux qui procurent alors un blocage utile pour la rétention normale à la zone d'interface. Cette possibilité de butée franche est obtenue grâce au dimensionnement des matériaux déformables qui font à ce moment office de rattrapage des jeux de fabrication, ce qui ne pouvait être obtenu avec les procédés d'assemblage antérieurs.

Ce principe d'assemblage par profilé peut être mis en oeuvre par exemple pour des barquettes, comme l'illustrent les figures 20A à 20C. Dans le système d'assemblage conçu pour la barquette 240 représentée par les figures 20A à 20C, quatre zones d'assemblage 2430; 2432 disposées sur le couvercle 243 et sur la boîte 242 sont prévues avec des possibilités de déformation locale.

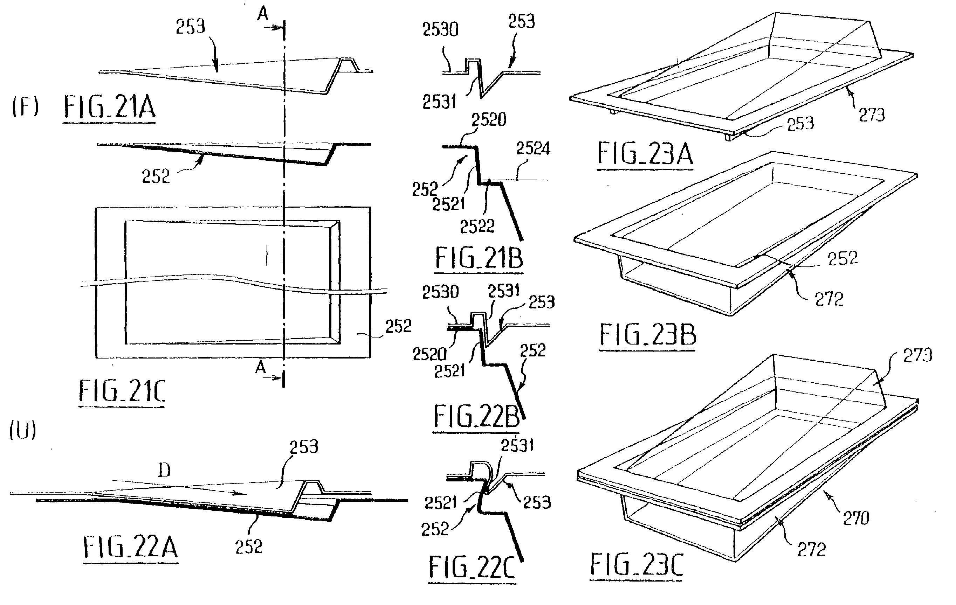

On peut également envisager un exemple de réalisation d'un système d'assemblage réversible selon l'invention présentant un profil en développé linéaire du type "simple avec pente", en référence aux figures 21A à 21C et 22A à 22C. Ce type de réalisation est particulièrement adapté pour des barquettes 270 (figures 23A à 23C) ne requérant qu'un niveau moyen de rétention normale à la zone d'interface. Au stade de la fabrication, la partie supérieure 253 du système d'assemblage selon l'invention, correspondant au couvercle de la barquette, comprend une zone de contact 2530 et une paroi déformable 2531, tandis que la partie inférieure 252 comprend une zone de contact 520, une paroi déformable 2521 et une zone de base 2522 sur laquelle est fixé un opercule pelable 2524.

En utilisation, les parties déformables 2521, 2531 des parties supérieure et inférieure 253, 252 entrent en contact au niveau de ce qui constitue une zone d'interface. Leur déformation a pour effet de réaliser une contre-dépouille qui contribue à la rétention normale du système. La mise en oeuvre du système d'assemblage peut par exemple intervenir après retrait de l'opercule pelable 2524.

Des systèmes d'assemblage sans pente à profil double ou à profil simple peuvent aussi être conçus dans le cadre de la présente invention.

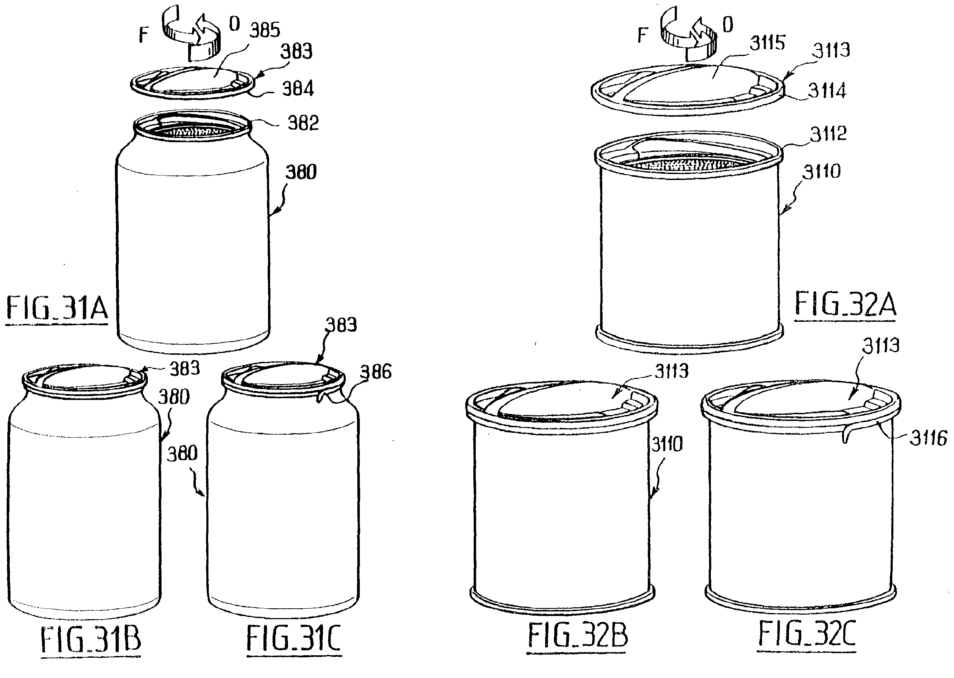

Le principe de rétention normale par serrage et déformation à la base de la présente invention peut aussi être mis en oeuvre pour la fermeture de conteneurs de révolution, des canettes métalliques, des pots de peinture, des pots de bébé, etc., comme l'illustrent les figures 31A à 31C et 32A à 32C.

On considère ainsi une canette 380 pourvue d'une première partie d'assemblage 382 à serrage progressif, et d'un couvercle 383 doté d'une seconde partie d'assemblage 384. Cette canette 380 peut en outre être pourvue d'une bague d'inviolabilité 386 (figure 31C). Un agencement semblable du système selon l'invention peut aussi être prévu pour la fermeture d'un pot de peinture 3110, en référence aux figures 32A à 32C, ce pot étant pourvu d'une première partie d'assemblage 3112 coopérant avec une seconde partie d'assemblage 3114 prévue sur un couvercle 3113. Les couvercles 383, 3113 équipant respectivement la canette 380 et le pot 3110 sont avantageusement pourvus sur leurs parties supérieures d'une pièce radiale 385, 3115 permettant à un utilisateur d'effectuer aisément un mouvement de rotation de ces couvercles pour leur ouverture ou leur fermeture.

Il est à noter que l'on peut avantageusement prévoir de tirer parti de la pression à l'intérieur d'une canette pourvue d'un système d'assemblage selon l'invention pour assurer l'étanchéité de ce système.

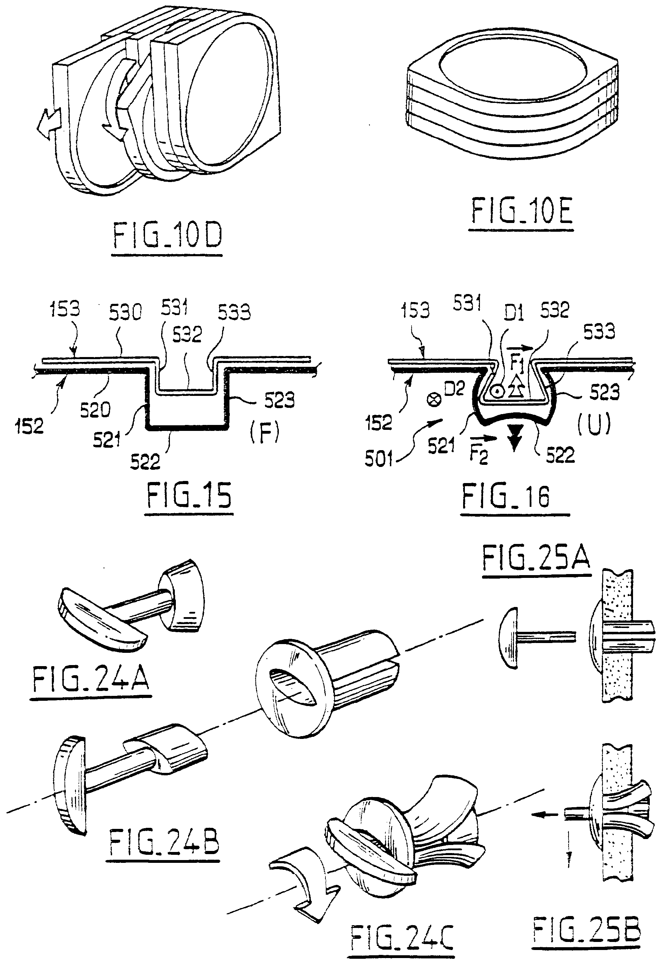

Des systèmes d'assemblage réversible selon l'invention peuvent être avantageusement appliqués pour obtenir un blocage en position d'équipements comportant des pièces mobiles, tels que des supports de projecteur, des canes à pèche télescopiques ou encore des éléments de calage rapide pouvant être utilisés par exemple dans un camion ou dans la soute d'un navire ou d'un avion. Dans ce type d'application, on fait appel à les fonctions de serrage progressif et de rétention par déformation procurées par l'invention. On peut aussi concevoir des systèmes d'assemblage destinés à réaliser des fixations dans des parois creuses, tel que le système représenté par les figures 24A-C, 25A-B ou le système représenté par les figures 33 et 34.

Une autre application intéressante de l'invention concerne des emmanchements d'éléments tubulaires coniques (figure 11), qui peuvent par exemple être utilisés pour réaliser des. dispositifs de signalisation.

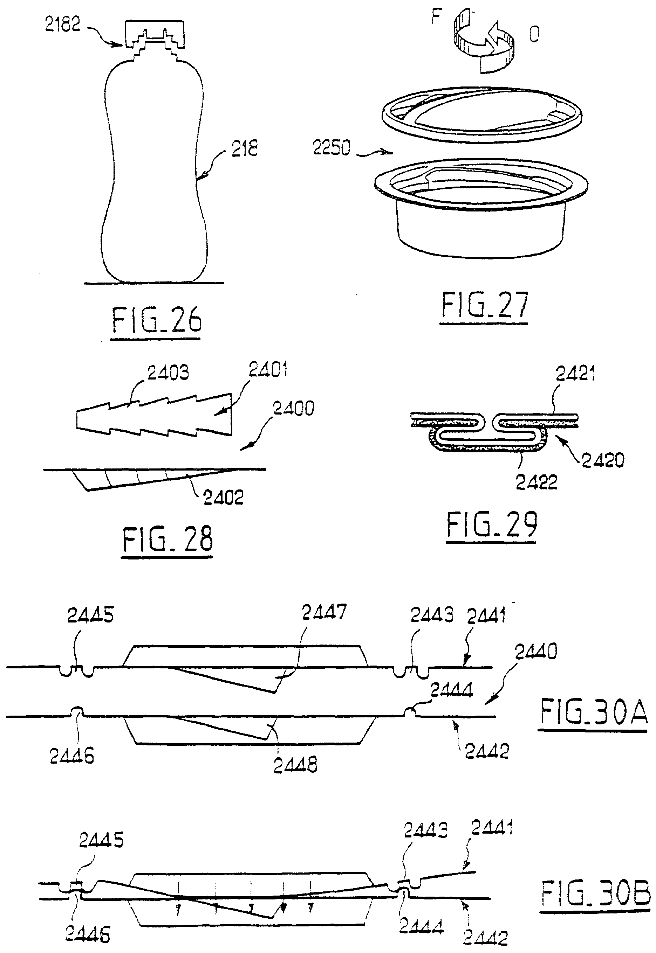

Des systèmes d'assemblage selon l'invention peuvent être mis en oeuvre dans de nombreuses autres applications. On peut citer, à titre d'exemples non limitatifs, des bouchons 2182 de type muiti-niveaux pour des bouteilles 18 (figure 26), des systèmes de fermeture pour des shakers 19 ou encore des systèmes de fermeture 2250 pour des pots utilisables en agro-alimentaire ou en cosmétique (figure 27).

Il est à noter que la présente invention vise également des systèmes d'assemblage à serrage progressif et à rétention normale présentant un caractère non réversible. Par exemple, on peut concevoir un système d'assemblage 2400 du type représenté en figure 28 avec montage à froid. Une première partie 2401 comprenant une série de dents 2403 présentant un profil spécifique peut être accouplée avec une seconde partie 2402 comportant elle-même un profil intérieur adapté pour recevoir les dents de la première partie. On peut aussi prévoir, en référence à la figure 29, un système d'assemblage 2420, correspondant notamment à un montage à chaud, dans lequel deux parties 2421, 2422 sont intimement couplées après déformation.

Lorsqu'il est nécessaire d'assurer un haut niveau d'étanchéité d'une enceinte pourvue d'un système d'assemblage selon l'invention, on peut avantageusement associer à ce système 2440 un dispositif permettant d'exercer une pression permanente de la partie supérieure 441 sur la partie inférieure 2442 de ce système, comme l'illustrent les figures 30A et 30B. Dans ce mode particulier de réalisation, la partie supérieure 2441 comprend une partie d'accouplement 2447 et, sur ses zones périphériques, des bossages doubles 2445, 2443 tandis que la partie inférieure comprend une partie d'accouplement 2448 et, sur ses zones périphériques, des bossages simples 2446, 2444 disposés sensiblement en vis à vis des bossages doubles de la partie supérieure 2441.

Lorsqu'on effectue l'assemblage des deux parties d'accouplement 2447, 2448 (figure 30B), les bossages 2446, 2444 de la partie inférieure entrent en contact avec les bossages doubles 2445, 2443 de la partie supérieure 2441, ce qui se traduit par un effet sonore de clic et par la création d'efforts de pression au niveau de la zone de contact des deux parties du fait du soulèvement des zones périphériques de la partie supérieure 2441.

Les avantages procurés par les systèmes selon l'invention sont d'ordre multiples, notamment: faible coût de fabrication du fait de l'absence de recours à des contre-dépouilles, progrès en matière d'hygiène du fait de la refermabilité des systèmes, sécurité de manipulation. En effet, s'agissant de ce dernier point, il est à noter que pour des barquettes thermoformées en plastique, notamment à destination alimentaire, pharmaceutique ou autre, les système d'assemblage selon l'invention présentent des bords arrondis sans aucun angle saillant, ce qui représente un atout en matière de sécurité, par rapport à des systèmes présentant des bords tranchants.

Dans les systèmes actuels, l'atmosphère contenue dans l'enceinte est retenue par un opercule pelable séparé du couvercle refermable, ce qui augmente le coût initial (matière et process) et pose des problèmes de recyclage.

Le système d'assemblage selon l'invention peut être facilement industrialisé en grande série, notamment parce qu'il supporte une grande souplesse au niveau des tolérances et ne nécessite pas d'outillages compliqués et offre une grande rapidité de fabrication.

Alors qu'auparavant, il fallait un couvercle et un film d'étanchéité, maintenant un seul produit réalise les deux fonctions. En usine, le couvercle est posé sans être serré. Une soudure pelable est ensuite réalisée tout autour afin de réaliser l'étanchéité et la conservation, en assurant une barrière bactériologique et chimique ad hoc. L'utilisateur vient peler le couvercle de la base. Ce couvercle lui ressert en suite pour refermer la barquette.

Comme le système d'assemblage selon l'invention peut être fabriqué dans un seul matériau, son recyclage en est aisé. De plus, on peut envisager de réutiliser les produits si on opte pour des solutions de déformation sans dépassement de la limite élastique du matériau.

Pour des canettes de boisson en métal, grâce aux bords arrondis sans aucun angle saillant, on s'affranchit des risques de blessure en consommation, pour les lèvres ou les doigts. Par ailleurs, le système d'assemblage selon l'invention permet d'offrir des surfaces lisses ne retenant pas le liquide à l'extérieur du contenant. Par ailleurs, le système d'assemblage selon l'invention peut offrir une refermabilité grâce à une poignée conçue dans le couvercle directement en fabrication. De plus, le couvercle pouvant recouvrir l'ensemble de la surface supérieure évite le dépôt de poussières qui risqueraient de se mêler au liquide.

Dans le système selon l'invention, le couvercle est normalement serré en usine créant ainsi le "filet de vis" qui nécessiterait un effort supérieur dû à la résistance des matériaux à la déformation, avec par exemple une languette rabattue et collée pour assurer l'inviolabilité. Il est également possible de réaliser un roulage en périphérie pour retenir le bouchon.

Le système d'assemblage selon l'invention comporte, dans ce domaine d'application, trois pièces, au lieu de quatre pour les systèmes actuels, ce qui présente un plus en matière de gestion de production. Par ailleurs, une possibilité de conditionnement parallèle à la fabrication des couvercles peut être envisagée, permettant ainsi en particulier une plus grande souplesse grâce à une dissociation des unités de fabrication et de conditionnement.

Dans le cas de l'application de l'invention pour des conteneurs métalliques, notamment des pots de peinture, le système d'assemblage selon l'invention apporte ici une sécurité accrue en manipulation. En effet, les manipulations des pots de peinture actuels requièrent l'utilisation d'ustensiles complémentaires tels que des tournevis pour leur ouverture et des marteaux pour leur fermeture. Avec le système selon l'invention, l'ouverture et la fermeture des pots de peinture peut être effectuée sans l'aide d'outils, ce qui présente un avantage significatif.

Bien sûr, l'invention n'est pas limitée aux exemples qui viennent d'être décrits et de nombreux aménagements peuvent être apportés à ces exemples sans sortir du cadre de l'invention. Ainsi, les matériaux utilisés pour la réalisation des coffrets ou boîtes peuvent être autres que des matériaux plastiques. De plus, dans l'application particulière aux coffrets de disques compacts, le nombre de disques contenus dans un coffret selon l'invention n'est limité que pas des contraintes de réalisation mécanique. Par ailleurs, les dimensions d'un coffret selon l'invention ne sont pas limitées au format compact actuel peuvent varier en fonction de l'évolution et de la diversité des formats de disque futurs.

Par ailleurs, on peut citer, à titre d'exemples d'application non limitatifs, des tournevis, des cannes à pèche télescopiques, des balais réglables, des tampons de maintien utilisés pour maintenir des distances ou régler un écartement, des éléments de calage rapide destinés par exemple au stockage ou à la manutention, des diffuseurs de parfums, des dispositifs de blocage de montée/descente pour projecteur ou des pots alimentaires pourvus d'un compartiment de complément. Mais la présente invention peut également trouver de nombreuses applications dans des secteurs requérant des montages rapides et aisés. On peut notamment citer à titre d'exemples non limitatifs les secteurs des urgences médicales, des soins dentaires, de la puériculture, du bricolage et des loisirs.

## Revendications

1. Système d'assemblage comprenant une première et une seconde parties d'un dispositif, lesdites première et seconde parties comprenant respectivement des premiers et seconds moyens d'accouplement situés respectivement sur les première et seconde parties, ces premiers et seconds moyens d'accouplement coopérant pour procurer par déplacement relatif d'une partie par rapport à l'autre un serrage progressif par génération d'efforts sensiblement normaux audit déplacement, **caractérisé en ce que** les premiers et seconds moyens d'accouplement (4, 3) comprennent chacun, au titre des zones de contact, une ou plusieurs rampes (410, 420, 430; 310, 320, 330) inclinées par rapport au plan d'assemblage et disposées sur les faces intérieures de la première et de la seconde parties (1, 2), les rampes inclinées des premiers et seconds moyens d'accouplement coopérant pour procurer, par une action extérieure de déplacement d'une partie par rapport à l'autre, un accouplement ou un désaccouplement des première et seconde parties (1, 2), et présentant des formes extérieures périphériques agencées pour procurer en outre en position fermée un coincement du système d'assemblage normal au déplacement.

2. Système selon la revendication 1, **caractérisé en ce que** les rampes inclinées (410, 420, 430; 310, 320 330) des premiers et seconds moyens d'accouplement (4, 3) présentent une partie basse en creux et une partie supérieure saillante émergeant par rapport à une région d'interface entre les deux première et seconde parties (1, 2), et **en ce que** les parties saillantes des rampes d'une partie du dispositif conteneur (10) sont agencées pour venir se loger dans les parties en creux des rampes de l'autre partie dudit dispositif à l'issue d'une opération d'assemblage, les parties saillantes venant déformer radialement les parties en creux réalisant la tenue de l'assemblage.

3. Système selon l'une des revendications 1 ou 2, **caractérisé en ce qu'**il comprend plusieurs sous-systèmes d'ouverture et d'assemblage répartis en plusieurs points du dispositif.

4. Système selon l'une quelconque des revendications précédentes, **caractérisé en ce qu'**il comprend plusieurs sous-systèmes d'assemblage répartis en plusieurs points du dispositif.

5. Système selon l'une quelconque des revendications précédentes, **caractérisé en ce que** les premiers et seconds moyens d'accouplement sont agencés en plusieurs niveaux.

6. Système selon l'une quelconque des revendications précédentes, **caractérisé en ce que** les pièces assemblées contenant les premiers et seconds moyens d'accouplement sont hermaphrodites.

7. Procédé d'assemblage mis en oeuvre dans un système selon l'une quelconque des revendications précédentes, **caractérisé en ce qu'**il comprend les étapes suivantes:
pour la fermeture du dispositif (10),
- accouplement des deux parties amovibles (1, 2) par déplacement d'une partie par rapport à l'autre dans un sens prédéterminé avec glissement sur les pentes inclinées,
- assemblage par serrage progressif normal au déplacement.

8. Dispositif (10), notamment coffret ou boîte, comprenant une première et une seconde parties (1, 2) assemblables de manière réversible pour définir un espace intérieur contenant, et un système d'assemblage selon l'une quelconque des revendications 1 à 6.

9. Dispositif (10) selon la revendication 8, **caractérisé en ce qu'**au moins l'une des deux parties (1, 2) présente une face extérieure sans prise directe.

10. Dispositif (10) conteneur selon l'une quelconque des revendications 8 ou 9, comprenant une première et une seconde parties (1, 2) présentant une symétrie de révolution, **caractérisé en ce que** les premiers et seconds moyens d'accouplement (4, 3) sont disposés respectivement aux centres des première et seconde parties (1, 2) du dispositif (10).

11. Coffret (10) pourvu d'un système d'assemblage selon l'une quelconque des revendications 1 à 6, **caractérisé en ce qu'**au moins l'une des deux parties (1, 2) comprend au moins partiellement une zone agencée pour procurer un effet de grossissement optique.

12. Coffret (50) pourvu d'un système d'assemblage selon l'une quelconque des revendications 1 à 6, **caractérisé en ce qu'**il est pourvu d'un cadre récepteur (5).

13. Coffret (50) selon la revendication 12, **caractérisé en ce que** ce cadre récepteur (5) présente un contour extérieur adapté pour permettre un rangement vertical prédéterminé.

14. Coffret (110) selon la revendication 13, **caractérisé en ce que** ce cadre récepteur (115) est en forme d'oeil.

15. Coffret selon l'une quelconque des revendications 12 à 14, **caractérisé en ce que** ce cadre récepteur est fabriqué directement avec l'une des deux parties du coffret.

16. Coffret selon l'une quelconque des revendications 11 à 15, **caractérisé en ce qu'**il comprend en outre un élément amovible de faible épaisseur, notamment une jaquette ou un livret, inséré entre les deux parties du coffret.

17. Conteneur de liquide (218, 380), notamment canette de boisson, pourvu d'un système selon l'une quelconque des revendications 1 à 6.

18. Canette de boisson (380) selon la revendication 17, **caractérisée en ce qu'**elle est pourvue d'une bague d'inviolabilité (386).

19. Conteneur métallique (3110), destiné notamment à contenir de la peinture ou un produit équivalent, pourvu d'un système selon l'une quelconque des revendications 1 à 6.

20. Conteneur selon l'une des revendications 17 à 19, **caractérisé en ce qu'**il comprend en outre une poignée d'ouverture reliée aux moyens d'accouplement faisant fonction de couvercle.

21. Conteneur comportant plusieurs modules empilés, **caractérisé en ce qu'**il comprend plusieurs systèmes selon l'une quelconque des revendications 1 à 6 pour assembler ces modules.

22. Plateau (140) comportant sur sa face supérieure des emplacements munis d'éléments d'accouplement (142) et prévus pour recevoir des pièces amovibles (141, 141a-c, 241) pourvues d'éléments d'accouplement (143) constituant avec les éléments d'accouplement (142) desdits emplacements des systèmes d'assemblage selon l'une quelconque des revendications 1 à 6.
